# EUROPÄISCHE PATENTSCHRIFT

(11) **EP 3 979 235 B1**
(45) Veröffentlichungstag und Bekanntmachung des Hinweises auf die Patenterteilung: **17.07.2024**
(21) Anmeldenummer: 21197407.6
(22) Anmeldetag: 17.09.2021
(51) Int. Cl.: G10K 11/16, F23D 14/46, F16L 55/033, F24C 3/08, F24F 13/24, F24C 3/02, F24H 9/00

(54) **LUFTEINLASSDÜSE FÜR GASHEIZGERÄTE**
AIR INLET NOZZLE FOR GAS HEATING DEVICE
BUSE D'ENTRÉE D'AIR POUR APPAREILS DE CHAUFFAGE AU GAZ

(30) Priorität: 30.09.2020 DE 102020125519
(43) Veröffentlichungstag der Anmeldung: 06.04.2022
(73) Patentinhaber: Vaillant GmbH, 42859 Remscheid (DE)
(72) Erfinder: Wahl, Tim, 42107 Wuppertal (DE)
(74) Vertreter: Popp, Carsten

(56) Entgegenhaltungen:
- WO-A1-00/55547
- DE-A1- 2 755 626
- KR-A- 20060 131 465
- RU-C1- 2 708 105
- US-A1- 2004 103 667
- US-A1- 2010 056 037

## Beschreibung

Die Erfindung betrifft eine Lufteinlassdüse für Gasheizgeräte und ein mit der Lufteinlassdüse ausgestattetes Gasheizgerät. Die Erfindung kommt insbesondere zur verbesserten Geräuschreduktion während der Zufuhr von Umgebungsluft in das Gasheizgerät zur Anwendung.

In Gasheizgeräten, wie zum Beispiel in dem der DE 27 55 626 A1, wird in der Regel ein Gebläse zum Ansaugen von Umgebungsluft eingesetzt, um die Brennkammer des Gasheizgerätes mit dem für die Verbrennung notwendigen Sauerstoff zu versorgen und ein zündfähiges Gas-Luft-Gemisch bereitzustellen. In den meisten Fällen ist vor dem Gebläse luftsaugseitig ein Schalldämpfer zur Reduktion von aerodynamischen Geräuschen vorgesehen, wobei die Luftströmung über eine Öffnung, oftmals in Form einer Einlassdüse, in den Schalldämpfer eintritt.

Eine solche Lufteinlassdüse kann mit einem Rohrabschnitt und einer runden Scheibe aus beliebigem Material gebildet sein. Die Scheibe weist einen umlaufenden Rand mit glatter Oberfläche und eine mittig angeordnete runde Lufteinströmungsöffnung mit einer scharfen Kante auf, sodass in Abhängigkeit vom eintretenden Luftvolumenstrom an der Kante Strömungsablösungen entstehen können, welche Geräuschemission erzeugen können. Abhängig von der Ausprägung dieser Strömungsablösungen kann zudem am Schalldämpfer ggf. aufgrund seines geringen Gewichtes eine strömungsinduzierte Schwingungsanregung auftreten, die zusätzlichen sekundären Luftschall abstrahlt, sodass der Geräuschpegel, insbesondere bei bestimmten Betriebspunkten, weiter ansteigen kann.

Es ist daher Aufgabe der Erfindung, die mit Bezug auf den Stand der Technik geschilderten Problem wenigstens teilweise zu lindern und insbesondere eine neuartige Lufteinlassdüse mit einer Geometrie bzw. Kontur bereitzustellen, die sich für den Einsatz luftsaugseitig vor dem Gebläse angebrachten Schalldämpfer eines Gasheizgerätes eignet.

Diese Aufgabe wird gemäß den Merkmalen des Anspruchs 1 gelöst. Vorteilhafte Ausgestaltungen ergeben sich aus den Merkmalen der abhängigen Ansprüche. Es ist darauf hinzuweisen, dass die Merkmale der Ansprüche mit weiteren Merkmalen der Beschreibung und/oder der Figuren kombinierbar sind, wodurch weitere Ausführungsvarianten aufgezeigt sind.

Hierzu trägt eine Lufteinlassdüse für ein Gasheizgerät bei, die einen Hohlkörper mit mindestens einer Lufteinströmungsöffnung umfasst, wobei die Lufteinströmungsöffnung von einem den Hohlkörper teilweise überdeckenden Mündungsrand umgeben ist, und wobei der Mündungsrand mit mehreren exponierten Strömungsbeeinflusselementen ausgeführt ist.

Die Lufteinlassdüse ist vorteilhafter Weise für einen Schalldämpfer, insbesondere einen Luftschalldämpfer, zur Reduktion von aerodynamischen Geräuschen und/oder Vermeidung von zusätzlichen aerodynamischen Geräuschen eingerichtet bzw. ausgelegt. Die Lufteinlassdüse kann mit dem Schalldämpfer auf dem Luftzufuhrweg eines Gasheizgerätes, insbesondere eines Gasheizgerätes für Gebäude, angeordnet oder installiert sein. Gerade ein Gebäude-Gasheizgerät kann direkt in einem Innenraum angebracht sein, wo ein besonders niedriger Geräuschpegel (z. B. kleiner als 50 dB in der Nacht) verlangt wird. Grundsätzlich kann die Lufteinlassdüse aber auch mit dem zusammenwirkenden Schalldämpfer im Luftzufuhrweg jeder anderen Ausführungsform eines Gasheizgerätes eingesetzt werden.

Der Hohlkörper kann insbesondere nach Art eines (ggf. lokal querschnittserweiterten) Leitungsabschnitt ausgeführt sein. Der Hohlkörper bzw. dessen Wandung begrenzt daher einen Hohlraum, in dem die einströmende Luft sich verteilen kann. Es ist möglich, dass im dem Hohlraum Strukturen, Leitplanken, Körper, etc. aufgenommen sind, die eine (vielfache) Aufteilung und/oder Umlenkung der Luftströmung innerhalb des Hohlkörpers einstellen.

Der Hohlkörper kann mit einer einzelnen Lufteinströmungsöffnung ausgeführt sein. Es ist möglich, dass die Lufteinströmungsöffnung bzw. jede einzelne Lufteinströmungsöffnung einen Mündungsrand aufweist.

Der Mündungsrand ist im Einströmungsbereich des Hohlkörpers und in Form einer Scheibe vor bzw. an dem Hohlkörper angeordnet sein. Er überdeckt den Hohlkörper je nach Gestaltung zumindest teilweise, bildet also insbesondere einen reduzierten oder verjüngten Querschnitt der Lufteinströmungsöffnung gegenüber dem Querschnitt (beides betrachtet in Strömungsrichtung der eintretenden Luftströmung) des Hohlkörpers aus. Der Mündungsrand kann nach Art eines Hinterschnitts für die Luftströmung ausgebildet sein. Der Mündungsrand ist eine Scheibe, die eine innenliegende, geschlossene Kante hat, welche zur Bildung der Lufteinströmungsöffnung ausgeführt ist. Der Mündungsrand kann mit der Wandung des Hohlkörpers verbunden sein, sodass der Mündungsrand mit einer bevorzugt mittigen Lufteinströmungsöffnung den Hohlkörper teilweise überdeckt und die Luftströmung über die Lufteinströmungsöffnung in den Hohlkörper eintreten kann. Der Mündungsrand ist zumeist aus einem Material mit einer vorgegebenen Materialstärke gebildet. Daher ist die Lufteinströmungsöffnung praktisch nicht rein 2-dimensional zu betrachten. Vielmehr kann folglich der Lufteinströmungsöffnung bzw. Kante eine Tiefe (Erstreckung in Strömungsrichtung) zugeordnet werden, die auch als Lufteinströmungsöffnungstiefe bezeichnet werden kann.

Die exponierten Strömungsbeeinflusselemente dienen hierbei insbesondere zur gezielten Einstellung, Reduzierung und/oder Vermeidung von Luftablösungen, wenn die Luftströmung über die Lufteinlassdüse in den Hohlkörper fließt. "Exponiert" soll in diesem Zusammenhang insbesondere zum Ausdruck bringen, dass diese Elemente ausgehend von einer (Grund-)Fläche des Mündungsrandes gezielt erzeugte signifikant hervorstehende Abschnitte, Erhebungen, etc. aufweisen, worunter insbesondere keine "reinen" Rauheitsschwankungen der Fläche zu verstehen sind. Es ist beispielsweise möglich, dass diese exponierten Elemente mit einem erhöhten Rand und einem erniedrigten Zentrum oder mit einem der (Grund-)Fläche nahen Rand und einem erhöhten Zentrum ausgebildet sind. Diese Strömungsbeeinflusselemente können zumindest teilweise in bzw. entgegen der (ankommenden) Luftströmung und/oder schräg bzw. senkrecht dazu exponiert sein. Es ist möglich, dass sich die Strömungsbeeinflusselemente praktisch ausschließlich in die vom Mündungsrand begrenzte Lufteinströmungsöffnung erstrecken. Es ist möglich, dass sich die Strömungsbeeinflusselemente nicht in den in Strömungsrichtung hinter der Lufteinströmungsöffnung befindlichen Hohlkörper bzw. Hohlraum hinein erstrecken.

Unter Luftablösungen versteht man das Phänomen der Wirbelbildung in der Luft am Strömungskörper. Wenn die Wirbel in unerwünschter Ausprägung ausgebildet sind, können sie zusätzliche Schallemission verursachen, was die Geräuschreduktion negativ beeinträchtigt. Denn der Luftschall ist im Wesentlichen eine mechanische Schwingung in der Luft, die auch in den Festköper übertragen werden kann, sodass strömungsinduzierte Schwingungen in den Festköper wie in der Kante, in der Wandung des Luftzufuhrkanales und im Schalldämpfer erzeugt werden können. Dies wird hier als unerwünschte Strömungsablösungen bezeichnet.

Daher soll die Luftströmung möglichst nach dem Einströmen über die Lufteinströmungsöffnung in einer vorgegebenen Ausprägung und/oder in eine vorgegebene Richtung den Schalldämpfer anströmen bzw. durchströmen, um die Geräusche so weit wie möglich zu reduzieren.

Die Mehrzahl oder gar Vielzahl von Strömungsbeeinflusselementen können gleiche oder ungleiche Formen aufweisen, in der Orientierung einander gleichartig, schräg zueinander und/oder entgegengesetzt angeordnet, hinsichtlich ihrer Größe und Dimension gleich und/oder abweichend ausgeführt sowie einteilig miteinander und/oder getrennt voneinander ausgebildet sein. Sie können regelmäßig neben und/oder in der Lufteinströmungsöffnung bzw. lokal am Mündungsrand angeordnet sein. Sie führen insbesondere zu einer besseren Vermischung von Luftströmungen mit unterschiedlichen Geschwindigkeiten, sodass die unerwünschten Strömungsablösungen, d. h. die Entstehung von Luftverwirbelungen an unerwünschten Stellen bzw. in unerwünschte Richtungen, reduziert oder gar verhindert werden. Die Luftströmung wird somit in die gewünschte Richtung geleitet, wodurch die Geräusche reduziert werden können.

Es ist bevorzugt, wenn die exponierten Strömungsbeeinflusselemente benachbart zueinander angeordnet sind. Hierfür können diese unmittelbar aneinandergrenzen, (teilweise) ineinander übergehen und/oder eine Distanz zueinander ausbilden.

Es ist bevorzugt, wenn die exponierten Strömungsbeeinflusselemente sich lokal in die Lufteinströmungsöffnung hinein erstrecken. Mit "lokal" ist insbesondere gemeint, dass ein einzelnes Strömungsbeeinflusselement sich nur über einen Teilbereich des Umfangs der Lufteinströmungsöffnung erstreckt, wobei der Teilbereich bevorzugt kleiner 20 %, insbesondere maximal 15 % oder sogar nur maximal 5 % des Umfangs umfasst. Es ist möglich, dass ein Strömungsbeeinflusselement parallel und/oder schräg zum Querschnitt der Lufteinströmungsöffnung ausgerichtet ist. Bevorzugt ist, dass alle sich in die Lufteinströmungsöffnung hineinragenden Strömungsbeeinflusselemente in gleicher Weise geformt aber in Richtung des Umgangs der Lufteinströmungsöffnung versetzt zueinander angeordnet sind.

Die exponierten Strömungsbeeinflusselemente erstrecken sich so in die Lufteinströmungsöffnung, dass sie unmittelbar auf der Kantenober-fläche und/oder entlang des Kantenumfangs an der Kante angeordnet sind, und können sich so in die Lufteinströmungsöffnung erstrecken, dass sie entlang der Kantentiefe an der Kante angeordnet sind.

Hierbei können beispielweise die oben beschriebenen Einkerbungen nicht nur in der Draufsicht auf der Mündungsrandoberfläche, sondern auch auf der Kantenoberfläche entlang der Kantentiefe angeordnet sein, sodass sich die Einkerbungen ausgehend von der Mündungsrandoberfläche in die Lufteinströmungsöffnung verteilen.

Darüber hinaus können die exponierten Strömungsbeeinflusselemente auch in Form von Prallflächen ausgeführt sein, die in der Draufsicht entlang dem Lufteinströmungsumfang angeordnet sind und sich in die Lufteinströmungsöffnung hinein erstrecken bzw. diese (teilweise oder vollständig) begrenzen.

Es ist bevorzugt, wenn mindestens eines der exponierten Strömungsbeeinflusselemente eine Prallfläche (für die Luftströmung) mit einer maximalen Breite von mindestens 5 % des Lufteinströmungsöffnungsumfangs aufweist.

Die Geometrie der Prallfläche soll grundsätzlich nicht auf eine bestimmte Form beschränkt sein. Dabei kann der Fuß der Prallfläche unmittelbar an der Kante angeordnet sein und sich der Kopf der Prallfläche in der Draufsicht in die Lufteinströmungsöffnung erstrecken. Die maximale Breite der Prallfläche beträgt vorzugsweise 5 bis 10% des Lufteinströmungsöffnungsumfangs, wobei besonders bevorzugt 6 bis 8 Prallflächen um der Lufteinströmungsöffnung angebracht werden können. Die Prallfläche kann zu einer besseren Vermischung von verschieden schnellen Luftströmungen führen, was schließlich die unerwünschte Strömungsablösung zumindest teilweise unterbindet und somit eine Reduktion der Geräuschemission bewirkt.

Die Prallfläche kann beispielweise als gleichschenkliges Dreieck ausgeformt werden, wobei dessen Basis oder Fuß unmittelbar an der Kante angeordnet und der Winkel zwischen den zwei gleich langen gegenüberliegenden Schenkelseiten als Kopf zur Mitte der Lufteinströmungsöffnung hin ausgerichtet ist. Es können 5 bis 8 Stück derartige Prallflächen unmittelbar nebeneinander liegen, somit bilden die Schenkelseiten in der Draufsicht eine chevronförmige Lufteinströmungsöffnung aus. Die Dreiecke besitzen vorzugsweise alle die gleiche Höhe, die vorzugsweise kleiner als die Hälfte der maximalen Lufteinströmungsöffnungsbreite ist. Die Prallflächen können auch als Bestandteil des Mündungsrandes stückig ausgeformt werden.

Es ist bevorzugt, wenn sich die exponierten Strömungsbeeinflusselemente lokal zumindest teilweise senkrecht zur Lufteinströmungsöffnung erstrecken.

Die exponierten Strömungsbeeinflusselemente können beispielweise in Form von Einkerbungen ausgeführt sein, die regelmäßig nebeneinander liegen, sodass senkrecht hervorstehende Dellen bzw. Erhebungen zwischen den nebeneinander liegenden Einkerbungen auf der Oberfläche des Mündungsrandes ausgebildet werden. Wenn die Luft an den Dellen vorbei strömt, werden viele kleine Wirbel an den Dellen ausgebildet, sodass eine turbulente Grenzschicht an der Oberfläche ausgebildet werden kann. Eine solche turbulente Grenzschicht hat den Vorteil, dass die restliche Luft von der Grenzschicht kaum beeinflusst wird. Die restliche Luft strömt an der turbulenten Grenzschicht ungestört vorbei, und zwar noch ungestörter als an einer herkömmlichen glatten Oberfläche des Mündungsrandes. Somit können die Geräusche reduziert werden. Die Einkerbungen liegen vorzugsweise derart nebeneinander, dass die Oberfläche des Mündungsrandes wie eine Golfballoberfläche aussieht.

Anstatt der Einkerbungen können die exponierten Strömungsbeeinflusselemente beispielweise auch in Form von Vorsprüngen ausgeführt werden, die nebeneinander auf der Oberfläche des Mündungsrandes angeordnet sind. Dabei wirken die Vorsprünge im Wesentlichen ähnlich wie die von Einkerbungen ausgebildeten Dellen und sorgen dafür, dass sich in der Grenzschicht viele kleine Wirbel ausbilden. Eine solche turbulente Grenzschicht beeinflusst die übrige Luftströmung viel weniger als eine laminare Grenzschicht, wie es oben bei den Einkerbungen beschrieben wird.

Die Vorsprünge können beispielweise eckig ausgeführt sein und um die Lufteinströmungsöffnung unmittelbar an der Kante und/oder benachbart auf der (angeströmten) Oberfläche des Mündungsrandes gleichmäßig und/oder radial verteilt angeordnet sein.

Eine (sich radial erstreckende) Länge der Vorsprünge beträgt vorzugsweise 50% bis 70% der Breite des Mündungsrandes, wobei die Breite die Radiendifferenz von Kante / Lufteintrittsöffnung zur radial äußeren Grenze ist. Eine (sich in Umfangsrichtung der Lufteinlass-öffnung erstreckende) Breite der Vorsprünge beträgt bevorzugt 3% bis 10%, insbesondere 4% (≈ 1/24) des Umfanges der Kante. Der Teilungswinkel zwischen zwei benachbarten Vorsprüngen beträgt vorzugsweise 45 Grad, sodass insgesamt acht Vorsprünge rund um die Lufteinströmungsöffnung vorgesehen sind.

Hierbei können sich die exponierten Strömungsbeeinflusselemente in Form der Einkerbungen, die auf der Mündungsrandoberfläche angeordnet sind, in der Schnittansicht senkrecht zur Lufteinströmungsöffnung erstrecken.

Hierbei können sich die exponierten Strömungsbeeinflusselemente auch in Form von Lamellen dicht und kontinuierlich entlang der Lufteinströmungsöffnung an der Kante verteilen und in der Schnittansicht senkrecht zur Lufteinströmungsöffnung erstrecken. Im Vergleich mit der Prallfläche weist eine Lamelle eine viel kleinere Breite auf. So wirken die dicht und kontinuierlich verteilten Lamellen wie eine gekämmte Verlängerung der Kante in die Luftströmungsrichtung. An den Lamellen können die Turbulenzballen wirkungsvoll in kleinere Turbulenzballen aufgebrochen werden, somit wird die Stärke von Luftdruckschwankungen reduziert, was zu einer verminderten Geräuschemission führt.

Es ist bevorzugt, wenn mindestens eines der exponierten Strömungsbeeinflusselemente eine sich zumindest teilweise entlang der Lufteinströmungsöffnung verlaufende Lamelle mit einer Länge von mindestens 50 % der Lufteinströmungsöffnungstiefe aufweist.

Es können bei der Lufteinlassdüse eine einzelne Art der hier vorgeschlagenen exponierten Strömungsbeeinflusselemente vorgesehen sein. Es ist jedoch auch möglich, dass bei der Lufteinlassdüse mehrere oder eine Vielzahl der Arten der hier vorgeschlagenen exponierten Strömungsbeeinflusselemente vorgesehen sind.

Es ist bevorzugt, wenn exponierte Strömungsbeeinflusselemente mit einer regelmäßigen Oberflächenstruktur gebildet sind bzw. eine solche ausbilden.

Die exponierten Strömungsbeeinflusselemente können beispielweise als Einkerbungen mit einer halbkugelförmigen Oberflächenstruktur oder als Vorsprünge mit einer quaderförmigen Oberflächenstruktur oder als Prallflächen mit einer dreieckförmigen Oberflächenstruktur oder als Lamellen mit einer zinkenförmigen Oberflächenstruktur ausgeformt werden. Regelmäßig bedeutet in diesem Zusammenhang insbesondere, dass die exponierten Strömungsbeeinflusselemente gleichartig und benachbart zueinander angeordnet sind, so dass ein gleichbleibendes Muster gegeben ist, welche die flächige Oberflächenstruktur bildet.

Es ist bevorzugt, wenn der Mündungsrand weder glatt ist noch eine runde Lufteinströmungsöffnung bildet. Mit anderen Worten sollen insbesondere keine Lufteinlassdüsen gemeint sein, die einen geradlinigen Kragen ausbilden, deren Oberflächenprofil nur von einer Oberflächenrauigkeit geprägt ist.

Es ist bevorzugt, wenn der Mündungsrand ein separates Bauteil ist, dass an einem zumindest teilweise zylindrischen Hohlkörper angeordnet ist. Es ist möglich, dass der Mündungsrand teilweise den Hohlkörper einfasst und mit diesem (stoffschlüssig und/oder kraftschlüssig) verbunden ist.

Es ist bevorzugt, wenn die exponierten Strömungsbeeinflusselemente Mikro-Turbulenzerzeuger sind.

Wie weiter oben beschrieben dienen die Strömungsbeeinflusselemente zum Vermeiden der Strömungsablösungen in unerwünschten Ausprägungen, indem sie in Form der Einkerbungen oder der Vorsprüngen an der Mündungsrandoberfläche eine turbulente Grenzschicht erzeugen oder in Form der Prallflächen oder der Lamellen die unerwünschten Turbulenzballen in kleinere Turbulenzballen aufbrechen. Hierbei sind die Strömungsbeeinflusselemente daher im Wesentlichen Mikro-Turbulenzerzeuger.

Es ist bevorzugt, wenn ein Gasheizgerät eine oben beschriebene Lufteinlassdüse umfasst. Es ist außerdem bevorzugt, wenn ein Schalldämpfer hinter der Lufteinlassdüse auf dem Luftzufuhrweg zur Brennkammer des Gasheizgerätes angeordnet ist.

Es wird eingangs erwähnt, dass die Luft über die Lufteinlassdüse in den Luftschalldämpfer eintritt und in bestimmten Betriebspunkten unerwünschte Strömungsablösungen strömungsinduzierte Schwingungen anregen können, wodurch die schalldämpfende Wirkung abgeschwächt wird. Die Lufteinlassdüse kann wie oben beschrieben die Luftströmung durch den Luftströmungsdeflektor umlenken, sodass die Luftströmung der Kontur der Lufteinlassdüse möglichst folgen kann und so die unerwünschten Strömungsablösungen vermieden werden können. Es ist besonders vorteilhaft, die erfindungsmäßige Lufteinlassdüse vor dem Luftschalldämpfer einzusetzen und mit dem Luftschalldämpfer zur optimierten aerodynamischen Geräuschreduktion zusammenzuwirken.

Die Tabelle im nachfolgenden zeigt die gemessene Lautheit bei einer Lufteinlassdüse mit exponierten Strömungsbeeinflusselementen in unterschiedlichen Ausführungsformen:

| **Ausführungsformen** | **Lautheit** |
|---|---|
| ohne Strömungsbeeinflusselemente | 13,17 |
| mit Prallflächen | 12,43 |
| mit Lamellen | 12,82 |
| mit Vorsprüngen | 11,62 |
| mit Einkerbungen | 11,75 |

Aus der Tabelle geht hervor, dass die Lautheit bei der Lufteinlassdüsen mit exponierten Strömungsbeeinflusselementen in vier beispielhaften Ausführungsformen niedriger ist als die Lautheit bei einer herkömmlichen Lufteinlassdüse ohne Strömungsbeeinflusselementen.

Die Erfindung sowie das technische Umfeld werden nun anhand der Figuren detailliert erläutert. Dabei zeigen schematisch
Fig. 1: eine Darstellung exponierter Strömungsbeeinflusselemente in mehreren Formen in Draufsicht auf eine Lufteinlassdüse,
Fig. 2: eine vertikale Schnittansicht einer Lufteinlassdüse,
Fig. 3: eine Darstellung der exponierten Strömungsbeeinflusselemente in mehreren Formen in Draufsicht auf eine Lufteinlassdüse;
Fig. 4: eine vertikale Schnittansicht einer weiteren Lufteinlassdüse,
Fig. 5: ein Diagramm über die gemessenen Geräuschpegel in Verhältnis zu den Frequenzen bei den beispielhaften Ausführungsformen A, B, C, D, und
Fig. 6: eine schematische Darstellung eines mit der beschriebenen Lufteinlassdüse ausgestatteten Gasheizgerätes.

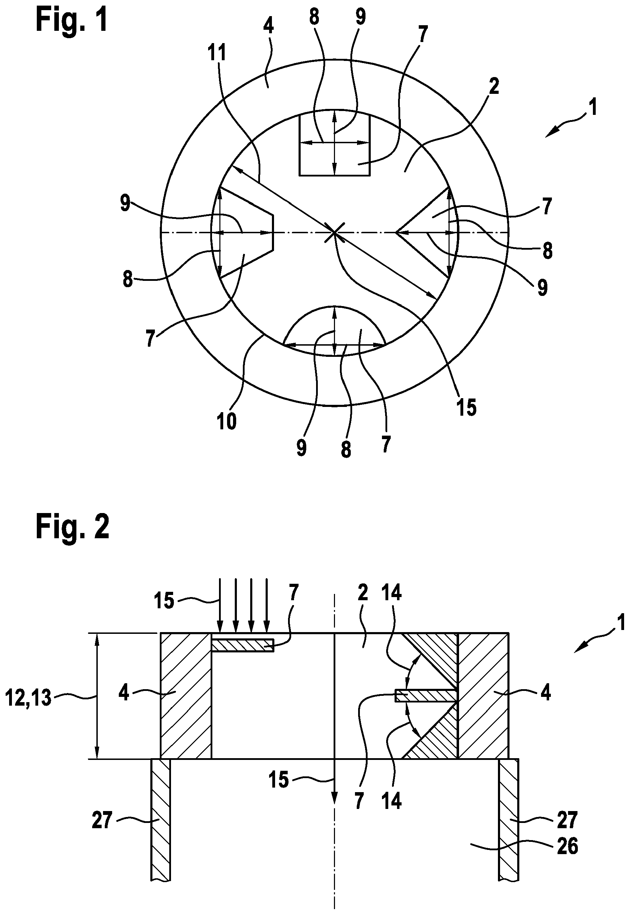

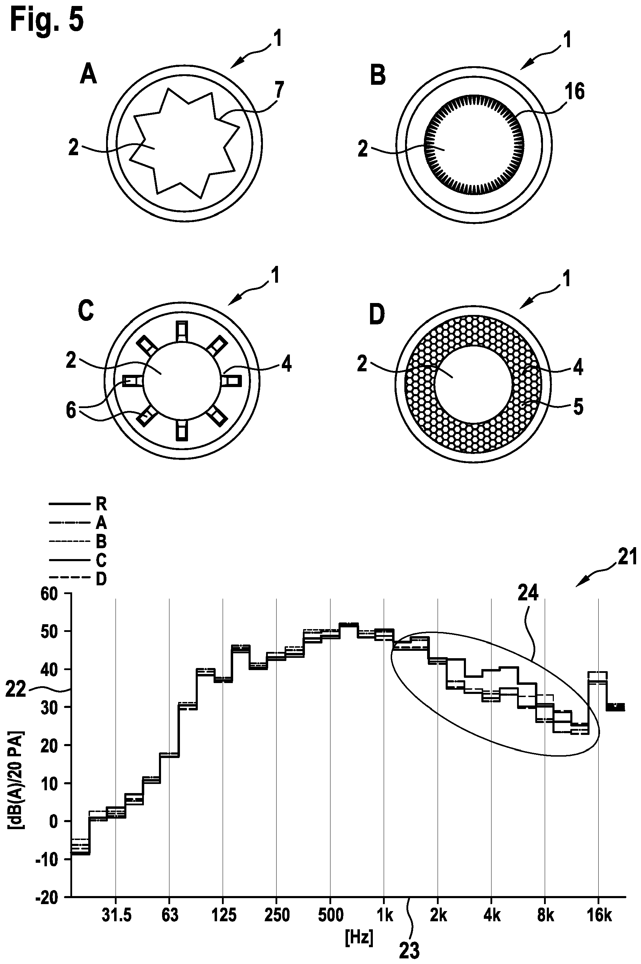

Fig. 1 zeigt Prallflächen 7 mit unterschiedlichen Geometrieformen, nämlich einer dreieckigen, einer rechteckigen, einer trapezförmigen und einer halbkreisförmigen Geometrieform, die sich ausgehend von einem scheibenförmigen Mündungsrand 4 in die Lufteinströmungsöffnung 2 erstrecken. Die Geometrie der Prallfläche 7 muss nicht unbedingt auf eine bestimmte Form beschränkt sein. Allerdings soll die Prallflächenbreite 8, die der maximalen Breite der Prallfläche entspricht, mindestens 5%, bevorzugt 5% bis 10%, des Lufteinströmungsumfanges 10 und die Prallflächenhöhe 9 maximal 50%, bevorzugt 20% bis 30%, der Lufteinströmungsöffnungsbreite 11 betragen. So können mehrere Prallflächen 7 zur Bildung einer unrunden Lufteinströmungsöffnung 2 nebeneinander angeordnet sein. Hierbei können beispielweise acht Stück dreieckförmiger Prallflächen 7 nahtlos nebeneinander angeordnet sein, sodass die Lufteinströmungsöffnung 2 als Chevron (vgl. Fig. 5) ausgestaltet ist.

Fig. 2 zeigt eine vertikale Schnittansicht einer Lufteinlassdüse 1, wobei beispielhaft links eine anströmbare trapezförmige Prallfläche 7 und rechts eine anströmbare dreieckige Prallfläche 7 angedeutet sind. Der Mündungsrand 4 weist in der Schnittansicht eine Dicke 13 auf, die eine Lufteinströmungsöffnungstiefe 12 bildet. Dabei können die Prallflächen 7 in Bezug auf die Lufteinströmungstiefe 12 in unterschiedlichen Höhenlagen oder auf selber Höhe relativ zur Lufteinströmungsöffnung 12 angeordnet sein. Es ist möglich, dass die Prallfläche 7, wie rechts angedeutet, in einem ersten Winkel 14 geneigt zur Lufteinströmungsöffnung 2 bzw. Einströmungsrichtung 15 angebracht ist, wobei dieser Winkel (ggf. im Betrieb selbstständig in Abhängigkeit der Strömung) einstellbar sein kann. Dabei beträgt der Winkel 14 bevorzugt maximal 30°. Der Mündungsrand 4 ist mit der Hohlkörper-Wandung 27 verbunden und überdeckt den Hohlkörper 26, sodass die Luftströmung über die Lufteinströmungsöffnung 2 in den Hohlkörper 26 strömen kann.

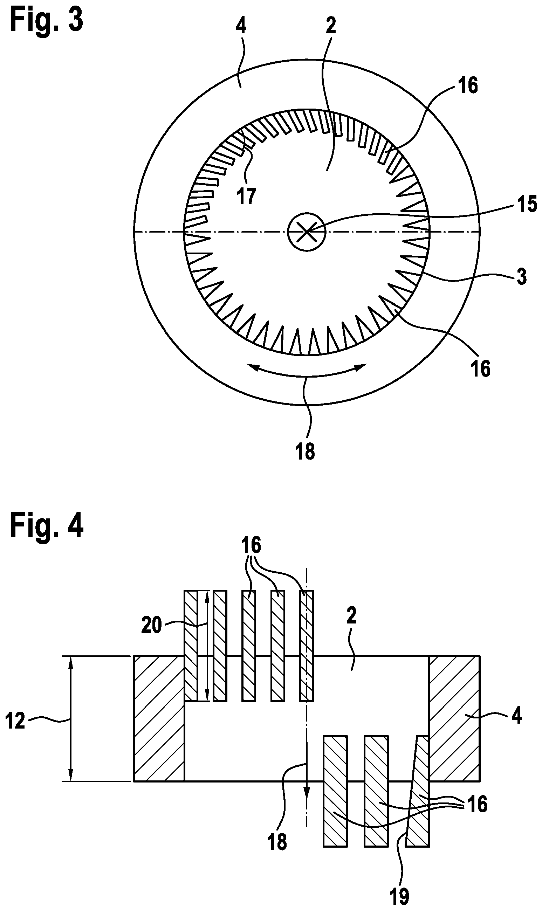

Fig. 3 zeigt Lamellen 16 in einer quaderförmigen oder einer kegelförmigen Geometrieform, die sich dicht und kontinuierlich entlang der Lufteinströmungsöffnung 2 an der Kante 3 bzw. entlang des Umfangs 18 verteilen und somit eine Art Kantenkamm bilden. Die Lamellen 16 können radial oder mit einem zweiten Winkel 17 schräg zum Radius verlaufend ausgeführt sein. Im Vergleich mit den Prallflächen 7 in Fig. 1 weisen die Lamellen 16 im Wesentlichen eine viel kleinere Dimension auf.

Fig. 4 zeigt eine vertikale Schnittansicht eines Mündungsrandes 4. Die Lamellen 16 können sich bspw. in Bezug auf die Lufteinströmungsöffnungstiefe 12 in unterschiedlichen Höhenlagen und im Wesentlichen senkrecht zur Lufteinströmungsöffnung 2 ausgerichtet erstrecken. Die Lamellenlänge 20 beträgt vorzugsweise mindestens 50% der Lufteinströmungsöffnungstiefe 12. Die Lamellen 16 können sich über ihre Lamellenlänge 20 unterschiedlich weit in die Lufteinströmungsöffnung 2 hinein erstrecken, wie rechts in Fig. 4 angedeutet, wobei die hineinragende Lamellenkontur 19 auch nicht-linear ausgebildet sein kann.

Fig. 5 zeigt oben beispielhaft und schematisch Lufteinlassdüsen 1 in vier unterschiedlichen Ausführungsformen A, B, C, D und darunter ihre zugehörigen Geräuschpegel-Messwerte in einem Diagramm 21.

Im Diagramm 21 ist eine Referenzmessung (gekennzeichnet mit R) durchgeführt worden, wobei in diesem Fall die Lufteinlassdüse 1 mit einem Mündungsrand 4, aufweisend eine kreisrunde Lufteinströmungsöffnung 2 und eine glatte Mündungsrandoberfläche, ausgestattet war.

Die Ausführungsform A hat acht dreieckförmige Prallflächen 7, die als Strömungsbeeinflusselemente entlang des Umfangs der Lufteinströmungsöffnung 2 angeordnet sind und sich in die Lufteinströmungsöffnung 2 erstrecken, sodass die Luftströmungsöffnung 2 als Chevron ausgestaltet ist.

Die Ausführungsform B hat eine Vielzahl von Lamellen 16, die als Strömungsbeeinflusselemente dicht und kontinuierlich entlang des Umfangs der Lufteinströmungsöffnung 2 angeordnet sind und sich senkrecht zur Lufteinströmungsöffnung 2 erstrecken, sodass ein hinterströmbarer Kantenkamm ausgebildet ist.

Die Ausführungsform C hat einen Mündungsrand 4, der die Lufteinströmungsöffnung 2 umgibt, wobei die Oberfläche des Mündungsrandes 4 acht quadratische Vorsprünge 6 als Strömungbeeinflusselemente aufweist, wobei sich die Vorsprünge 6 gleichmäßig und radial um die Lufteinströmungsöffnung 2 verteilen.

Die Ausführungsform D hat einen Mündungsrand 4, der die Lufteinströmungsöffnung 2 umgibt, wobei die Oberfläche des Mündungsrandes 4 viele kleine und regelmäßig angeordnete Einkerbungen 5 als Strömungsbeeinflusselemente, ähnlich einer Golfballoberfläche, aufweist.

Das Diagramm 21 stellt die gemessenen Geräuschpegel 22 in Verhältnis zu den Frequenzen 23 dar. Dabei repräsentieren die unterschiedlichen Frequenzen 23 die unterschiedlichen Betriebspunkte. Die durchgezogene Kennlinie R zeigt die gemessenen Geräuschpegel 22 bei einer herkömmlichen Lufteinlassdüse, während die gepunkteten Linien A, B, C, D die gemessenen Geräuschpegel 22 bei der Lufteinlassdüse in den Ausführungsformen A, B, C, D zeigen. In optimalen bzw. überwiegend genutzten Betriebspunkten 24, z. B. im Frequenzbereich von 1 bis ca. 16 KHz, sind die Geräuschpegel 22 der Ausführungsformen A, B, C, D deutlich niedriger als die Geräuschpegel 22 der herkömmlichen Ausführungsform. Dies bedeutet, dass die Lufteinlassdüsen mit den Strömungsbeeinflusselementen gegenüber der herkömmlichen Lufteinlassdüse im Frequenzbereich 1 bis ca. 16 KHz Geräusche deutlich besser reduzieren können, wobei dieser Frequenzbereich auch den empfindlichsten Bereich (3 bis 4KHz) des menschlichen Hörsinns umfasst.

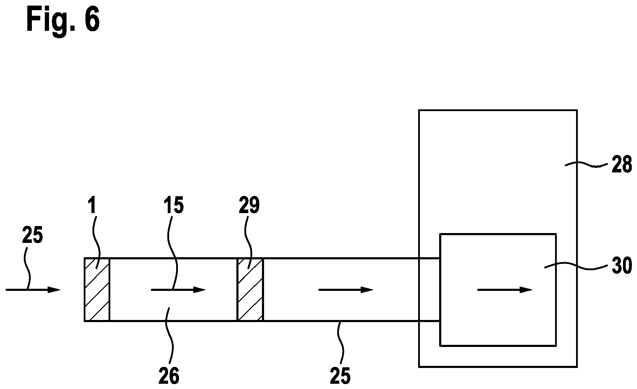

Fig. 6 zeigt eine schematische Darstellung eines mit der oben beschriebenen Lufteinlassdüse 1 ausgestatteten Gasheizgerätes 28. Die Lufteinlassdüse 1 ist vor einem Schalldämpfer 29 auf dem Luftzufuhrweg 25 zur Brennkammer 30 des Gasheizgerätes 28 angeordnet. Die Luftströmung strömt über die Lufteinlassdüse 1 in den Hohlkörper 26 und anschließend über den Schalldämpfer 29 in die Brennkammer 30. Mittels der Strömungsbeeinflusselemente (nicht in Figur 6 dargestellt) wird eine Wirbelbildung in unerwünschten Ausprägungen vermieden. Somit kann eine strömungsinduzierte Schwingungsanregung am Schalldämpfer 29 vermieden werden, wodurch Geräusche effektiv reduziert werden können.

### Bezugszeichenliste

- 1: Lufteinlassdüse
- 2: Lufteinströmungsöffnung
- 3: Kante
- 4: Mündungsrand
- 5: Einkerbung
- 6: Vorsprung
- 7: Prallfläche
- 8: Prallflächenbreite
- 9: Prallflächenhöhe
- 10: Lufteinströmungsöffnungsumfang
- 11: Lufteinströmungsöffnungsbreite
- 12: Lufteinströmungsöffnungstiefe
- 13: Dicke
- 14: erster Winkel
- 15: Einströmungsrichtung
- 16: Lamelle
- 17: zweiter Winkel
- 18: Umfang
- 19: Lamellenkontur
- 20: Lamellenlänge
- 21: Diagramm
- 22: Geräuschpegel
- 23: Frequenz
- 24: optimale Betriebspunkte
- 25: Luftzufuhrweg
- 26: Hohlkörper
- 27: Hohlkörper-Wandung
- 28: Gasheizgerät
- 29: Schalldämpfer
- 30: Brennkammer

## Patentansprüche

1. Lufteinlassdüse (1) für ein Gasheizgerät (28), umfassend einen Hohlkörper (26) mit mindestens einer Lufteinströmungsöffnung (2), die von einem den Hohlkörper (26) teilweise überdeckenden Mündungsrand (4) umgeben ist, **dadurch gekennzeichnet, dass** der Mündungsrand (4) als Scheibe ausgeführt ist, die eine innenliegende, geschlossene Kante (3) zur Bildung der Lufteinströmungsöffnung hat, und mit mehreren exponierten Strömungsbeeinflusselementen (5, 6, 7,16) ausgeführt ist, die unmittelbar auf einer Oberfläche oder unmittelbar entlang des Umfangs der Kante (3) angeordnet sind.

2. Lufteinlassdüse (1) nach Anspruch 1, wobei die exponierten Strömungsbeeinflusselemente (5, 6, 7, 16) benachbart zueinander angeordnet und einteilig miteinander ausgebildet sind.

3. Lufteinlassdüse (1) nach Anspruch 1 oder 2, wobei die exponierten Strömungsbeeinflusselemente (5, 6, 7, 16) sich lokal in die Lufteinströmungsöffnung (2) hinein erstrecken.

4. Lufteinlassdüse (1) nach Anspruch 3, wobei mindestens eines der exponierten Strömungsbeeinflusselemente (5, 6, 7, 16) eine Prallfläche (7) mit einer maximalen Breite (8) von mindestens 5 % eines Lufteinströmungsöffnungsumfangs (10) aufweist.

5. Lufteinlassdüse (1) nach einem der vorhergehenden Ansprüche, wobei die exponierten Strömungsbeeinflusselemente (5, 6, 7, 16) sich lokal zumindest teilweise senkrecht zur Lufteinströmungsöffnung (2) erstrecken

6. Lufteinlassdüse (1) nach Anspruch 5, wobei die exponierten Strömungsbeeinflusselemente (5, 6, 7, 16) als Einkerbung oder Vorsprüngen auf der angeströmten Oberfläche des Mündungsrandes (4) ausgebildet sind.

7. Lufteinlassdüse (1) nach Anspruch 5, wobei mindestens eines der exponierten Strömungsbeeinflusselemente (5, 6, 7, 16) eine sich zumindest teilweise entlang der Lufteinströmungsöffnung (2) verlaufende Lamelle (16) mit einer Länge (20) von mindestens 50% einer Lufteinströmungsöffnungstiefe (12) aufweist.

8. Lufteinlassdüse (1) nach einem der vorhergehenden Ansprüche, wobei der Mündungsrand als Hinterschnitt für die Luftströmung ausgeführt ist.

9. Lufteinlassdüse (1) nach einem der vorhergehenden Ansprüche, wobei der Mündungsrand (4) ein separates Bauteil ist, dass an einer zumindest teilweise zylindrischen Hohlkörper-Wandung (27) angeordnet ist.

10. Gasheizgerät (28), umfassend eine Lufteinlassdüse (1) nach einer der vorhergehenden Ansprüche.

11. Gasheizgerät (28) nach Anspruch 10, wobei ein Schalldämpfer (29) hinter der Lufteinlassdüse (1) auf dem Luftzufuhrweg (25) zur Brennkammer (30) des Gasheizgerätes (28) angeordnet ist.

## Claims

1. Air inlet nozzle (1) for a gas heating device (28), comprising a hollow body (26) with at least one air inflow opening (2), which is surrounded by a rim edge (4) partially covering the hollow body (26), **characterized in that** the rim edge (4) is configured as a disc which has an internal, closed edge (3) for forming the air inflow opening, and is configured with a plurality of exposed flow-influencing elements (5, 6, 7, 16) which are arranged directly on a surface or directly along the circumference of the edge (3).

2. Air inlet nozzle (1) according to claim 1, wherein the exposed flow influencing elements (5, 6, 7, 16) are arranged adjacent to one another and are formed in one piece with one another.

3. Air inlet nozzle (1) according to claim 1 or 2, wherein the exposed flow influencing elements (5, 6, 7, 16) extend locally into the air inflow opening (2).

4. Air inlet nozzle (1) according to claim 3, wherein at least one of the exposed flow influencing elements (5, 6, 7, 16) has a baffle surface (7) with a maximum width (8) of at least 5% of an air inflow opening circumference (10).

5. Air inlet nozzle (1) according to any one of the preceding claims, wherein the exposed flow influencing elements (5, 6, 7, 16) extend locally at least partially perpendicular to the air inflow opening (2).

6. Air inlet nozzle (1) according to claim 5, wherein the exposed flow influencing elements (5, 6, 7, 16) are configured as indentations or projections on the surface of the rim edge (4) exposed to the flow.

7. Air inlet nozzle (1) according to claim 5, wherein at least one of the exposed flow influencing elements (5, 6, 7, 16) has a blade (16) extending at least partially along the air inflow opening (2) with a length (20) of at least 50% of an air inflow opening depth (12).

8. Air inlet nozzle (1) according to any one of the preceding claims, wherein the rim edge is configured as an undercut for the air flow.

9. Air inlet nozzle (1) according to any one of the preceding claims, wherein the rim edge (4) is a separate component which is arranged on an at least partially cylindrical hollow body wall (27).

10. Gas heating device (28), comprising an air inlet nozzle (1) according to any one of the preceding claims.

11. Gas heating device (28) according to claim 10, wherein a silencer (29) is arranged behind the air inlet nozzle (1) on the air supply path (25) to the combustion chamber (30) of the gas heating device (28).

## Revendications

1. Buse d'entrée d'air (1) pour un appareil de chauffage au gaz (28), comprenant un corps creux (26) avec au moins une ouverture d'admission d'air (2) qui est entourée par un bord d'embouchure (4) recouvrant partiellement le corps creux (26), **caractérisée en ce que** le bord d'embouchure (4) est réalisé sous forme de disque qui présente une arête (3) fermée intérieure pour la formation de l'ouverture d'admission d'air et est réalisé avec plusieurs éléments exposés influençant l'écoulement (5, 6, 7, 16) qui sont disposés directement sur une surface ou directement le long du périmètre de l'arête (3).

2. Buse d'entrée d'air (1) selon la revendication 1, dans laquelle les éléments exposés influençant l'écoulement (5, 6, 7, 16) sont disposés de manière adjacente les uns aux autres et formés d'un seul tenant les uns avec les autres.

3. Buse d'entrée d'air (1) selon la revendication 1 ou 2, dans laquelle les éléments exposés influençant l'écoulement (5, 6, 7, 16) s'étendent localement dans l'ouverture d'admission d'air (2).

4. Buse d'entrée d'air (1) selon la revendication 3, dans laquelle au moins l'un des éléments exposés influençant l'écoulement (5, 6, 7, 16) présente une surface d'impact (7) avec une largeur maximale (8) d'au moins 5 % d'un périmètre d'ouverture d'admission d'air (10).

5. Buse d'entrée d'air (1) selon l'une quelconque des revendications précédentes, dans laquelle les éléments exposés influençant l'écoulement (5, 6, 7, 16) s'étendent localement au moins partiellement perpendiculairement à l'ouverture d'admission d'air (2).

6. Buse d'entrée d'air (1) selon la revendication 5, dans laquelle les éléments exposés influençant l'écoulement (5, 6, 7, 16) sont réalisés comme encoches ou saillies sur la surface du bord d'embouchure (4) parcourue par l'écoulement.

7. Buse d'entrée d'air (1) selon la revendication 5, dans laquelle au moins l'un des éléments exposés influençant l'écoulement (5, 6, 7, 16) présente une lamelle (16) s'étendant au moins partiellement le long de l'ouverture d'admission d'air (2) avec une longueur (20) d'au moins 50 % d'une profondeur d'ouverture d'admission d'air (12).

8. Buse d'entrée d'air (1) selon l'une quelconque des revendications précédentes, dans laquelle le bord d'embouchure est réalisée comme contre-dépouille pour l'écoulement d'air.

9. Buse d'entrée d'air (1) selon l'une quelconque des revendications précédentes, dans laquelle le bord d'embouchure (4) est un composant distinct qui est disposé au niveau d'une paroi de corps creux (27) au moins partiellement cylindrique.

10. Appareil de chauffage au gaz (28) comprenant une buse d'entrée d'air selon l'une quelconque des revendications précédentes.

11. Appareil de chauffage au gaz (28) selon la revendication 10, dans lequel un amortisseur de bruit (29) est disposé derrière la buse d'entrée d'air (1) sur la voie d'alimentation en air (25) vers la chambre de combustion (30) de l'appareil de chauffage au gaz (28).
